(19) Europäisches Patentamt
European Patent Office
Office européen des brevets

(11) EP 2 299 303 B1

(12) **EUROPEAN PATENT SPECIFICATION**

(45) Date of publication and mention
of the grant of the patent:
**20.12.2017  Bulletin 2017/51**

(51) Int Cl.:
***G02B 6/028*** (2006.01)

(21) Application number: **10176645.9**

(22) Date of filing: **14.09.2010**

(54) **Multimode optical fibre with reduced bending losses**

Multimodefaser mit niedrigen Biegeverlusten

Fibre optique multimode à pertes de courbure réduites

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **17.09.2009  FR 0904447
18.09.2009  US 243626 P**

(43) Date of publication of application:
**23.03.2011  Bulletin 2011/12**

(73) Proprietor: **Draka Comteq B.V.
1083 HJ Amsterdam (NL)**

(72) Inventors:
• **Molin, Denis
91210, Draveil (FR)**
• **Sillard, Pierre
78150, Le Chesnay (FR)**
• **Lumineau, Yves
95220, Herblay (FR)**

(74) Representative: **Algemeen Octrooi- en Merkenbureau B.V.
P.O. Box 645
5600 AP Eindhoven (NL)**

(56) References cited:
**EP-A1- 2 056 138          EP-A2- 1 164 393
WO-A1-2005/106544     JP-A- 8 304 636
JP-A- 11 064 665         JP-A- 2002 318 315
US-A- 4 176 911          US-A1- 2009 059 353**

• **JACOMME L.: "Modal dispersion in multimode graded-index fibers", APPLIED OPTICS USA, vol. 14, no. 11, 1 November 1975 (1975-11-01), pages 2578-2584, XP1623442, The institution of electrical engineers, Stevenage, GB ISSN: 0003-6935**

**Description**

The present invention relates to the field of optical fibre transmissions, and more specifically, to a multimode optical fibre having greatly reduced bending losses for use in high-speed applications.

In standard fashion, an optical fibre is composed of an optical core having the function of transmitting and optionally amplifying an optical signal, and an outer optical cladding having the function of confining the optical signal within the optical core. To this end, the refractive indices of the optical core $n_{core}$ and of the outer optical cladding $n_{cladding}$ are such that $n_{core} > n_{cladding}$. In the following description where the "core" of the optical fiber is mentioned the optical core is meant, unless otherwise stated; and where the "cladding" of the optical fiber is mentioned, the outer optical cladding is meant, unless otherwise stated; and where "fibre" is stated and optical fibre is meant, unless otherwise stated or otherwise clear from the context.

The refractive index profile of a fibre denotes the graph associating the refractive index with the radius of the fibre. In standard fashion, the distance to the centre of the fibre is shown on the x-axis, and on the y-axis, the difference is shown between the refractive index of the fibre at radius r and the refractive index of the cladding of the fibre. Generally the refractive index profile is qualified according to its appearance. Thus the index profile is described in terms of a "step", "trapezium", "triangle", or "alpha" for graphs which have step, trapezium, triangle, or graded ($\alpha$) shapes respectively. These curves are representative of the theoretical or set profile of the fibre, while the manufacturing constraints of the fibre may result in a slightly different profile.

Two main types of optical fibres exist, multimode fibres and single mode fibres. In a multimode fibre, for a given wavelength, several optical modes are propagated simultaneously along the fibre, whereas in a single mode fibre optical modes of a higher order are strongly attenuated. The typical diameter of a single mode or multimode optical fibre is 125 $\mu$m. The core of a multimode fibre typically has a diameter of 50 $\mu$m or 62.5 $\mu$m, whereas the core of a single-mode fibre generally has a diameter of approximately 6 $\mu$m to 9 $\mu$m. The multimode optical systems are less expensive than the single mode optical systems, as the sources, connectors, and maintenance are of lower cost.

Now, in a multimode fibre, the bandwidth is linked to the intermodal dispersion. In fact, the bandwidth results from the difference between the propagation times, or group delay times, of the optical modes along the fibre. In particular, for the same propagation medium (in a step index multimode fibre), the different modes have group delay times which are different. This results in a time lag between the pulses propagating in different radial directions. A time lag between the individual pulses causes a broadening of the resulting light pulse with a risk of this broadening being superimposed onto a following pulse, and therefore reducing the data rate supported by the fibre. The bandwidth is therefore directly linked to the group delay time of the optical modes propagating in the multimode core of the fibre. In order to guarantee a broad bandwidth, it is necessary for the group delay times of all the modes to be identical; i.e. for the intermodal dispersion to be zero, or at least minimized, for a given wavelength.

In order to reduce the intermodal dispersion in a multimode fibre, it has been proposed to produce graded-index fibres with an "alpha" or $\alpha$- core profile. Such a fibre has been used for many years and its characteristics have been described in particular in "Multimode theory of graded-core fibres" by D. Gloge et al., Bell system Technical Journal 1973, pp 1563-1578, and summarized in "Comprehensive theory of dispersion in graded-index optical fibers" by G. Yabre, Journal of Lightwave Technology, February 2000, Vol. 18, No. 2, pp 166-177.

A fibre having a graded-index profile or alpha-index profile - these two terms are equivalent - is a fibre with a graded-index core surrounded by a cladding with a constant optical index. The $\alpha$ index profile follows a power law for parameter $\alpha$ which can be defined by a relationship between the index value n at a certain point as a function of the distance r from this point to the centre of the fibre:

$$n(r) = n_{max}\sqrt{1 - 2\Delta\left(\frac{r}{r_1}\right)^{\alpha}}$$

with $\alpha \geq 1$; $n_{max}$, the maximum optical index of the core of the multimode fibre; $r_1$, the radius of the core of the multimode fibre; and

$$\Delta = \frac{\left(n_{max}^2 - n_{min}^2\right)}{2n_{max}^2}$$

where $n_{min}$ is the minimum refractive index of the multimode core, generally corresponding to the refractive index of the cladding (most often made of natural or synthetic, doped or undoped silica).

A graded-index multimode fibre therefore has a core profile with a rotational symmetry such that in any radial direction the value of the refractive index decreases continuously from the centre of the fibre to its periphery. When a multimode light signal propagates in such a core having a graded index, the different modes experience a different propagation medium, which affects their speed of propagation differently. By an adjustment of the value of the parameter $\alpha$, it is therefore possible to obtain a group delay time which is virtually equal for all the modes, and therefore a reduced intermodal dispersion. This results in the multimode fibres, having an $\alpha$ index profile as the refractive index profile, having a maximum bandwidth for the communication of data.

Hereinafter, by the expression "standard graded-index fibre" is meant a fibre with an $\alpha$ optical index profile satisfying international standards and such that the minimum optical refractive index of the core and the refractive index of the cladding are equal. In such a situation, the difference between the minimum optical index of the core and the refractive index of the cladding is strictly less than $1\times10^{-3}$, or even zero. Multimode fibres have been the subject of international standardization under standard ITU-T G.651.1 which in particular defines criteria for bandwidths, numerical aperture, core diameter; which relate to the requirements for compatibility between fibres. The standard OM3 has been adopted to satisfy high-speed applications (greater than 1GbE) over long distances (greater than 300 m). With the development of high-speed applications the average core diameter has been reduced from 62.5 $\mu$m to 50 $\mu$m.

Such multimode fibres with a large bandwidth are in particular intended to be used for short distances in a local area network (LAN) in which they might be subjected to accidental bending. Such bends modify the mode power distribution and can consequently modify the bandwidth of the fibre.

It is therefore interesting to design a multimode fibre which is unaffected by bends even for radii of curvature of less than 10 mm. Such a fibre must be compatible with the standard graded-index fibres and allow high-speed transmission of 10 Gb/s in 10GbE systems for example (GbE for Gigabit Ethernet)

One solution to such a problem could consist in adjusting the conditions for injection of the light originating from a light source into the fibre considered. As all the modes are affected differently by bends, it would be sufficient to modify the injection conditions so that the only modes in which a coupling exists with the injected light are modes unaffected by bends.

However, in practice, the source and the coupling device between the source and the fibre impose launch conditions preventing the adjustment of the injection conditions.

Moreover, restricting the coupling to the lowest order modes involves a loss of power coupling efficiency.

Such a phenomenon can be accompanied by an increase in the impact of the mode partition noise on the light transmitted in the fibre. The increase appears when laser sources are used in combination with the fibre and in particular if VCSEL (Vertical Cavity Surface Emitting Laser) diodes allowing a transmission of 10 GbE are used. The mode partition noise corresponds to "jitter" of the signal phase due to the combined effects of changing the main mode of the optical source ("mode hopping") and intramodal distortions in the fibre. The change of the main mode is a sudden jump in the optical frequency of the optical source, associated with transitions between the different modes of the resonator. Thus, the change of the main mode of the optical source leads to random modifications in the wavelength affecting the group velocity and therefore the propagation time. Over the length of the fibre, the cumulative effect of this variation of the group velocity is to induce phase jitter, i.e. mode partition noise.

EP 1 164 393 A1 of Asahi glass company Ltd. discloses a plastic optical fibre. The publication of Jacomme L. in applied optics USA, vol. 14, no. 11 of November 1, 1975 pages 2578-2584 discloses modal dispersion in multimode graded-index fibers. JP-A-2002 318315 of Sumitomo Electric industries dislcoses an optical fibre. EP 2 056 138 A1 discloses a multimode graded-index silica fiber. US 4 176 911 discusses the bending losses and the noise in multimode graded-index fibers with a refractive index discontinuity between the core and the cladding. It is also known to apply additional bends to the multimode fibre. Thus an access network with a multimode fibre in which part of the multimode fibre is bent is known from the document EP-A-1 727 302. This results in a reduction in transmission loss due to a bend in the remaining network. In the same way as for the solution mentioned previously for modifying the injection conditions, the application of additional bends to a multimode fibre can also induce losses in the power coupling efficiency with, if appropriate, an increase in the impact of the mode partition noise if VCSELS allowing a 10 GbE transmission are used.

Another solution is a dedicated fibre architecture i.e. a specific optical index profile. It is known to reduce the bending losses of a graded-index multimode fibre by adding a depressed trench between the core and the cladding. The documents WO-A-2008085851 and US-A-20080166094 thus describe a graded-index core surrounded by a depressed trench. The graded-index fibre's resistance to bending losses is thus increased.

Such a solution poses several problems, in particular with respect to manufacture. Typically, the central core, i.e. the "alpha" core, the cladding and part of the external protective cladding are obtained by chemical vapour deposition (CVD) in a silica tube. The cladding or external protective cladding is constituted by the tube and the overcladding of the tube generally with natural or doped silica. The overcladding may be obtained by any other deposition technique (VAD or OVD). However, the implementation of the solutions of the documents WO-A-2008085851 and US-A-20080166094 requires a broad deposition zone, which is not optimal from the point of view of the cost of chemical vapour deposition techniques. In fact, this leads to the production of a smaller length of fibre per core rod.

Moreover the addition of a depressed trench results in the appearance of supplementary propagation modes known as leaky modes. The leaky modes have effective refractive indices which are lower than those of the guided modes. This leads to an increase in the numerical aperture in the graded-index fibres comprising a depressed trench, in comparison with the graded-index fibres without a depressed trench. Such a difference in numerical aperture can lead to losses during connections within a system comprising graded-index fibres with a depressed trench and graded-index fibres without a depressed trench.

A need therefore exists for a graded-index fibre having reduced bending losses with coupling losses to a standard graded-index fibre which are more limited than in the state of the art.

For this purpose, the invention proposes a silica-based multimode optical fibre comprising an outer optical cladding, with an optical index $n_{cladding}$ and a central core having a radius $r_1$ and an optical index profile with a graded index of parameter $\alpha$, also called an $\alpha$ optical index profile with a graded index. The maximum optical index of the core is $n_{max}$ and the minimum optical index of the core is $n_{min}$. The fibre is such that the relationships $2 \times 10^{-3} < n_{min} - n_{cladding} \leq 5 \times 10^{-3}$ and $n_{max} - n_{min} > 10 \times 10^{-3}$ are satisfied and exhibits a bending loss less than 0.1 dB per two turns for a radius of curvature of 15 mm. The outer optical cladding is in direct contact with the core.

According to the present invention the outer optical cladding directly surrounds the "alpha" core. According to the present invention the radius of the central core $r_1$ is comprised between 22 $\mu$m and 28 $\mu$m. The present invention relates to silica-based optical fibers.

According to another embodiment example, the parameter $\alpha$ is comprised between 1.9 and 2.2, preferably between 1.9 and 2.1 and more advantageously between 2.0 and 2.1.

According to another embodiment example, the numerical aperture (NA) of the fibre defined by

$$NA = \sqrt{n_{max}^2 - n_{min}^2}$$ is greater than 0.18.

According to yet another embodiment example, the numerical aperture NA of the fibre defined by

$$NA = \sqrt{n_{max}^2 - n_{min}^2}$$ is less than 0.29.

Such a fibre can be used in a local area network (LAN).

The invention also proposes an optical transmission system comprising at least one portion of such an optical fibre.

According to an embodiment the system has a data rate greater than or equal to 10 Gb/s up to 100 m.

According to another embodiment the system has a data rate greater than or equal to 10 Gb/s up to 300 m.

Such a system can be used in a local area network (LAN).

Other characteristics and advantages of the invention will become apparent on reading the following detailed description of the embodiments of the invention, given by way of example only and with reference to the drawings which show:

- Figure 1, a graph of bending losses of a fibre as a function of the effective refractive index difference at a wavelength of 1300 nm;

- Figure 2, a graph of bending losses of a fibre as a function of the effective refractive index difference at a wavelength of 850 nm;

- Figure 3, an index profile of an example of a fibre according to the invention.

- Figure 4, a graph of the development of the bending losses for two turns as a function of the radius of curvature of the bending imposed on a fibre;

- Figure 5, an index profile of a standard graded-index fibre and the modes propagating in the fibre;

- Figure 6, an index profile of an example of a graded-index fibre according to the invention and the modes propagating in the fibre;

- Figure 7, a graph of the efficiency of coupling between the mode groups of the standard graded-index fibre and the mode groups of the graded-index fibre according to the example of Figure 3;

- Figure 8, a graph of the efficiency of coupling between the mode groups of the standard graded-index fibre and the mode groups of the graded-index fibre according to the example of Figure 3;

- Figure 9, a graph showing the propagation delays of the modes as a function of the main mode number for a standard graded-index fibre and

- Figure 10 a graph showing the propagation delays of the modes as a function of the main mode number for a multimode graded-index fibre according to the invention.

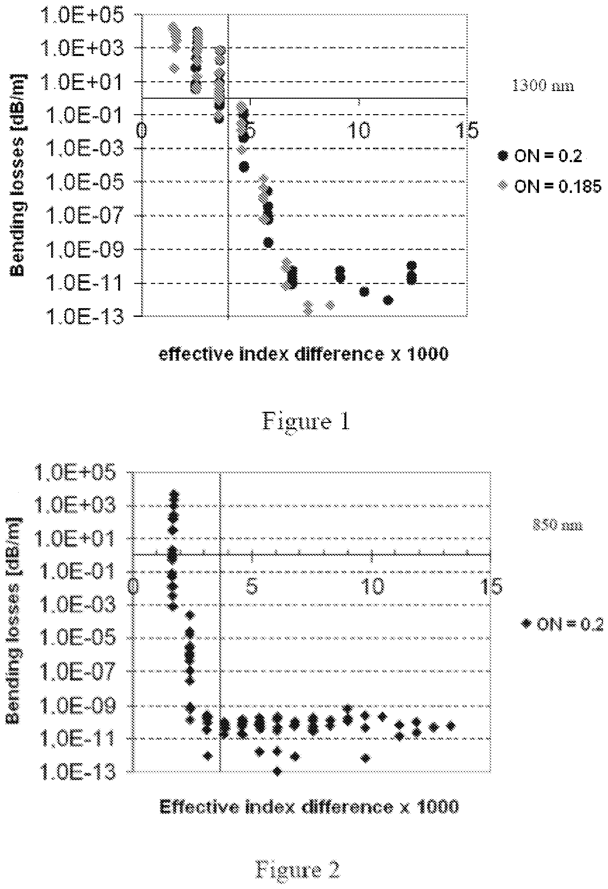

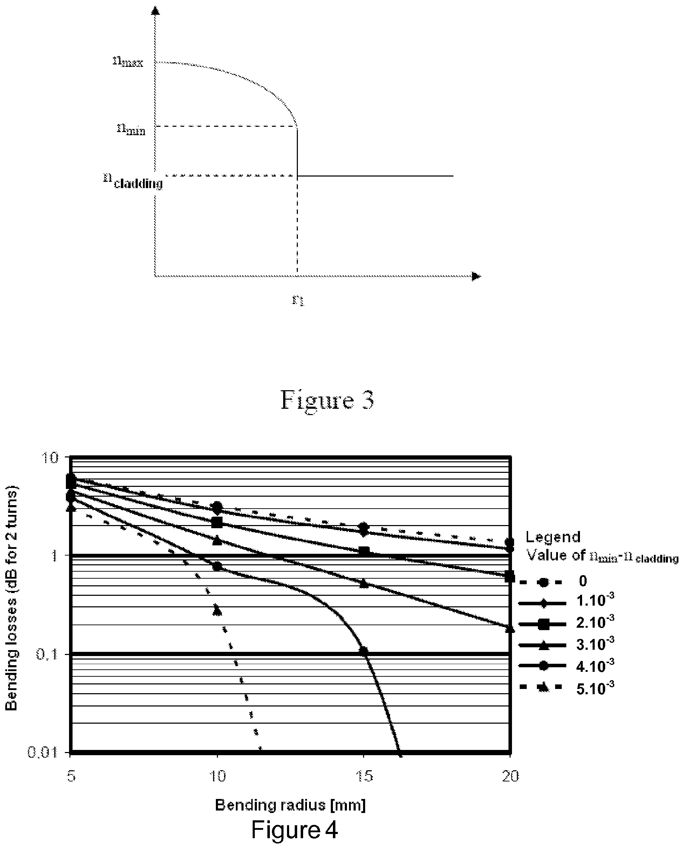

It is known that the bending losses in the modes of a multimode fibre depend mainly on the effective mode index. This is in particular illustrated by Figures 1 and 2 which are graphs of bending losses of a fibre as a function of the effective index difference of the mode considered respectively at 1300 nm and 850 nm. The effective index difference is the difference between the effective refractive index of the mode and the refractive index of the cladding. Each of the two experiments is carried out for two numerical apertures (ON) of the fibre: 0.2 and 0.185 and a radius of curvature for the bending imposed on the fibre of 15 mm. In the examples of Figures 2 and 3, the modes affected by bends have an effective index difference of $4 \times 10^{-3}$. The extent to which a multimode fibre is affected is therefore directly linked to the ratio of the number of modes unaffected by bends to the total number of modes.

The idea behind the present invention consists of increasing the effective refractive index of the guided modes which guide modes also exist in the standard graded-index multimode fibre. For this purpose, a specific multimode fibre architecture is proposed which is unaffected by bending losses for high-speed data transmission (typically 10 GbE).

Such an architecture is shown in Figure 3. Figure 3 is a refractive index profile of an example of a fibre according to the invention. The fibre comprises an outer optical cladding the optical index of which is substantially constant over the whole width of the optical cladding. The optical index of the cladding is denoted with $n_{cladding}$. The fibre also comprises a core with a radius $r_1$, the cladding being in direct contact with the core. This means that the architecture of Figure 3 has no trenches. The core of the fibre according to the example of Figure 3 has a radius typical of a multimode fibre. The radius of the core is comprised between 22 μm and 28 μm, and preferably 25 μm.

The core has an alpha optical index profile with respect to the outer optical cladding as defined previously. The parameter alpha can be comprised between 1.9 and 2.2, preferably between 1.9 and 2.1 and still more advantageously between 2.0 and 2.1. The maximum optical index of the core is denoted with $n_{max}$ and the minimum optical index of the core is denoted $n_{min}$. The fibre is such that the difference between the maximum optical index of the core and the minimum optical index of the core is greater than $10 \times 10^{-3}$ which is expressed by the relationship $nmax-nmin > 10 \times 10^{-3}$.

The fibre is characterised by the fact that the minimum optical index of the core is strictly greater than the index of the cladding. This can be expressed mathematically by the fact that the difference between the minimum optical index of the core and the index of the cladding is a strictly positive quantity, which means that $n_{min} - n_{cladding} > 0$. This means that there is a distinct of discontinuous drop in the refractive index at the value of $r = r_1$, going from a refractive index value of $n_{min}$ to a refractive index value of $n_{cladding}$. This drop controls the modal dispersion, which modal dispersion must be controlled to guarantee modal bandwith compatibility with data communication. The interface between the core and the cladding is defined by this discontinuous drop in the refractive index. The cladding directly surrounds the core without the presence of an intermediate cladding or depressed trench.

With respect to a standard graded-index fibre, the fibre according to the invention in accordance with the example of Figure 3 differs in that the refractive index of the graded-index core is increased with respect to the optical index of the cladding. The fibre according to the invention in accordance with the example of Figure 3 thus has the advantage of having reduced bending losses. Such a fibre is moreover compatible with the standard graded-index fibres. The advantages of the fibre according to the example of Figure 3 are explained in greater detail below.

The reduction in bending losses becomes more clearly apparent on considering Figure 4. Figure 4 is a graph on a semi-logarithmic scale which shows the development of the bending losses for two turns as a function of the radius of curvature of the bend imposed on the fibre at a wavelength of 850 nm. The development is represented for different values of the difference between the minimum optical index of the core and the index of the cladding, namely 0 (the fibre is then a standard graded-index fibre), $1.10^{-3}$, $2.10^{-3}$, $3.10^{-3}$, $4.10^{-3}$ and $5.10^{-3}$.

The multimode optical fibres used for the experiment of Figure 2 all have an effective numerical aperture of 0.2. The effective numerical aperture NA of a fibre is defined by the expression:

$$NA = \sqrt{n_{eff,max}^2 - n_{eff,min}^2}$$

where $n_{eff,min}$ and $n_{eff,max}$ are respectively the minimum and maximum effective refractive indices of the modes comprised in the signal measured at the fibre output under OFL (overfilled launch) conditions. Under such conditions, the excitation of the signal at the fibre input is uniform over all the propagation modes. This assumes the use of a light source exhibiting uniform excitation over the entire radial surface of the fibre, for example a laser diode or LED (Light Emitting Diode).

However, a good approximation of the effective numerical aperture is obtained with the square root of the difference in the squares of the refractive indices of the core of the fibre. This can also be written in the form of the relationship:

$$NA = \sqrt{n_{max}^2 - n_{min}^2}$$

where $n_{max}$ and $n_{min}$ are respectively the maximum and minimum refractive indices of the fibre profile. The approximate formula is used hereafter.

For the case of a standard graded-index fibre, the effective numerical aperture of a multimode fibre with a core of radius 25 μm amounts to 0.2 whereas the effective numerical aperture for a multimode fibre having a core of radius 31.25 μm amounts to 0.275.

In the experiment of Figure 4, all the guided modes in the fibre have an effective index greater than $n_{min}$ and are also excited. As explained below during the description of a system with a portion of fibre according to the example of Figure 3, this is possible by coupling the fibre according to the example of Figure 3 with a standard graded-index multimode fibre under OFL conditions or with a source the numerical aperture of which is less than the effective numerical aperture of the fibre according to the example of Figure 3.

At a constant effective numerical aperture, the greater the difference between the minimum optical index of the core and the index of the cladding for the fibre the greater the reduction in bending loss for the fibre. By way of illustration, for a radius of curvature of 10 mm, the bending losses for a fibre according to the invention are reduced by approximately 30% with respect to a standard graded-index fibre. This shows that the fibre according to the invention exhibits reduced bending losses with respect to a standard graded-index fibre.

The effect of reducing the bending losses is yet more marked for the fibres according to the invention so that $n_{min}-n_{cladding}$ is $4 \times 10^{-3}$ or $5 \times 10^{-3}$ for which the reduc-

tions in bending losses with respect to a standard graded-index fibre are at least 73% or 90%.

Thus, increasing the value of the difference between the minimum optical refractive index of the core and the refractive index of the cladding with a constant effective numerical aperture reduces the extent to which the fibre is affected by bends. It may therefore be advantageous for the difference between the minimum optical refractive index of the core and the refractive index of the cladding to be strictly greater than $2 \times 10^{-3}$. In such a case, the fibre can exhibit a bending loss of less than 0.1 dB for two turns for a radius of curvature of 15 mm.

Such a fibre is intended to be used in an optical transmission system. It is therefore interesting to study the compatibility of the multimode fibre according to the invention as depicted in the example of Figure 3 with a standard graded-index fibre as defined previously.

However, the increase in the contrast of the refractive index for the fibre according to the example of Figure 3 generally leads to greater linear losses, in particular due to the increase in Rayleigh diffusion and/or absorption. Moreover, the chromatic dispersion of the fibre according to Figure 3 can be greater than for a standard graded-index fibre. Moreover, the numerical aperture of the fibre of Figure 3 is greater than the maximum permitted value. The numerical aperture of the fibre according to the example of Figure 3 can in particular be greater than 0.18. The numerical aperture can also be less than 0.29. The two conditions can moreover be fulfilled by the same fibre according to the example of Figure 3, in which case the numerical aperture is comprised between 0.18 and 0.29.

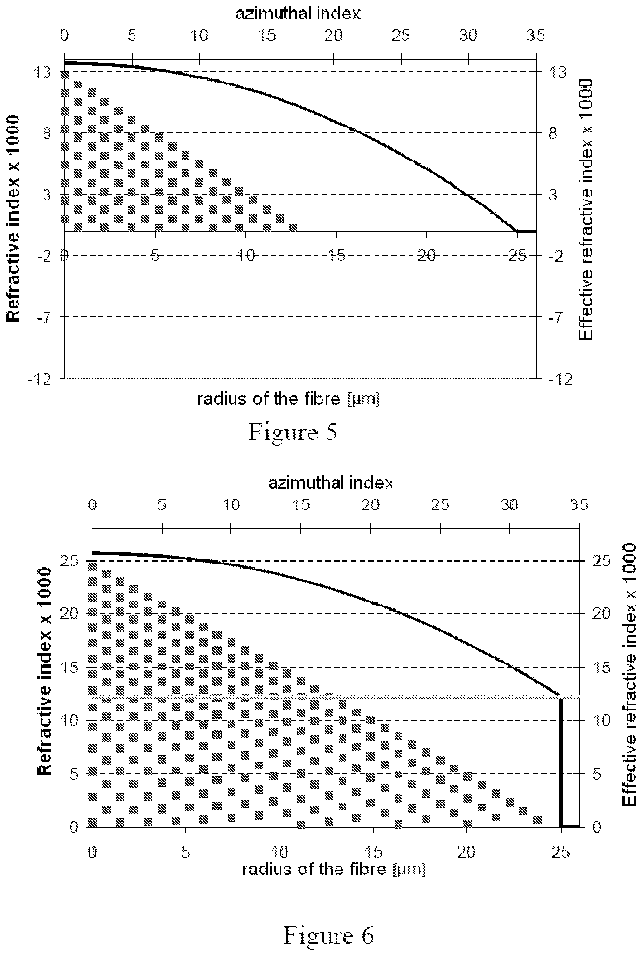

The fibre of Figure 3 does not therefore fulfil the conditions of the standards. This means that additional modes are permitted by the refractive index profile of the fibre according to the example of Figure 3, the modes not existing in the standard graded-index fibre. Comparison of Figures 5 and 6 makes it possible to illustrate this fact.

Figure 5 shows the index profile of a standard graded-index fibre. As explained above, this is an $\alpha$ profile. The lower x-axis shows the radius of the fibre, and the y-axis on the left shows the refractive index of the standard graded-index fibre. The refractive index profile with respect to the cladding is represented by a black unbroken line. The graph also shows the modes which propagate in the fibre by means of dots. The y-axis on the right shows the relative effective refractive indices of the propagation modes, i.e. the difference between the effective refractive index of the mode and the refractive index of the cladding. A reference called the azimuthal index, shown on the upper x-axis, corresponds to each mode. This index is also called the main mode number. Typically the modes are placed in groups of visible modes in a horizontal direction of the graph. For example the fibre shown comprises 18 mode groups.

Figure 6 shows a graph similar to Figure 5 for a fibre according to the example of Figure 3. Thus, the lower x-axis similarly shows the radius of the fibre, and the y-axis on the left shows the refractive index of the fibre according to the example of Figure 3. The fibre according to the example of Figure 3 has the same $\alpha$ profile as the standard graded-index fibre with a value for the difference between the minimum index of the core and the cladding amounting to $10 \times 10^3$. The graph also shows the modes which propagate in the fibre. The y-axis on the right shows the relative effective refractive indices of the propagation modes. A reference called the azimuthal index, shown on the upper x-axis, corresponds to each mode. The fibre shown comprises 33 mode groups. The number of modes in the fibre according to the example of Figure 3 is therefore greater than the number of modes in a standard graded-index fibre.

However, among these 33 mode groups, only 18 mode groups have an effective index greater than the minimum optical index of the core. These are the modes which are situated above the dotted line in Figure 6. The 18 lower order modes of the fibre according to the example of Figure 3 are as numerous as those of the standard graded-index fibre. The 18 modes have a higher effective index than the 18 modes of the corresponding standard graded-index fibre which explains their better resistance to bending losses.

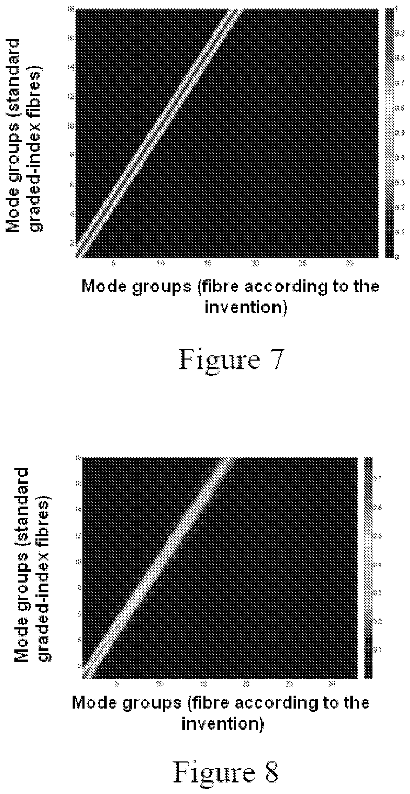

Nevertheless, the 18 modes have the same azimuthal index and consequently the same shape. The modes of a standard graded-index fibre therefore exist in a fibre according to the example of Figure 3. As a result, when the fibre according to the example of Figure 3 is coupled with a standard graded-index fibre, each guided mode of the standard graded-index fibre is coupled with only one mode (the closest from the point of view of shape), and thus each mode group of the standard graded-index fibre is coupled in only the same mode group in the fibre according to the example of Figure 3. The higher order modes in the fibre according to the example of Figure 3 which do not exist in the standard graded-index fibre are not excited because they are orthogonal to all the guided modes of the standard graded-index fibre. This becomes apparent in particular by analyzing the graphs of Figures 7 and 8.

Figures 7 and 8 graphically illustrate the efficiency of coupling between the 18 mode groups of the standard graded-index fibre and the 33 mode groups of the fibre according to the example of Figure 3. The two fibres used are the same as the fibres used for Figures 5 and 6. A grey scale is used, a coupling of 1 corresponding to an ideal coupling, without losses between the standard graded-index fibre and the fibre according to the example of Figure 3 and a coupling of 0 corresponding to an absence of coupling. Figure 7 is produced under conditions where the two fibres are perfectly centred with respect to each other whereas in the case of Figure 8, the fibres are shifted 3 $\mu$m in relation to each other. As noted previously, a mode group of the standard graded-index fibre has the best coupling with the mode group of the fibre having the same main mode number whether in the perfect alignment (Figure 7) or shifted (Figure 8) configuration. As a result the mode groups with a main mode number greater than 18 cannot be excited by a standard graded-index fibre. It is thus shown that the standard graded-index fibre cannot excite additional modes generated in the fibre according to the example of Figure 3 by the overall increase in the refractive index of the core. A fibre according to the example of Figure 3 is therefore compatible in combination with a standard graded-index fibre having the same $\alpha$ profile. This means that a connection between a fibre according to the example of Figure 3 and a standard graded-index fibre does not mix and does not filter the propagation modes. A fibre according to the example of Figure 3 therefore exhibits very good coupling with a standard graded-index fibre.

From this observation, it follows that the transmission system can moreover comprise a light source with a numerical aperture less than the numerical aperture of a standard graded-index fibre. If such a source is centred in terms of position and angularly, the light originating from the source will be injected into the guided modes which are compatible with the modes of the standard graded-index fibre, which means that the excited modes will have an effective index comprised between the extreme indices of the core of the fibre, i.e. $n_{min}$ and $n_{max}$.

When it would be preferable to use a source so that the numerical aperture is less than the numerical aperture of a standard graded-index fibre, additional modes are generated. It is then possible to design a specific cable and/or apply additional bends as described in the document EP-A-1 727 302 in order to eliminate only the additional modes created.

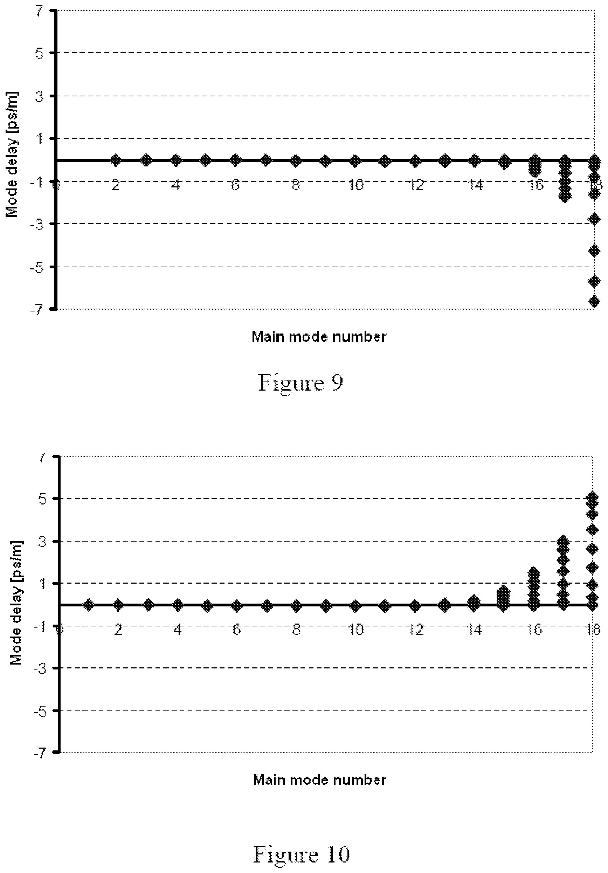

Figures 9 and 10 are graphs which illustrate the propagation times for the mode groups respectively of the standard graded-index fibre used for Figures 5 and 7 and of the fibre according to the example of Figure 3 used for Figures 6 and 8. The modal dispersions observed are similar. Therefore, the fibres according to the example of Figure 3 have the same ability to support transmissions at a greater bit rate than the standard graded-index fibres.

The fibre according to the example of Figure 3 is therefore a graded-index fibre exhibiting reduced bending losses with coupling losses to a standard graded-index fibre which are more limited than in the state of the art. The manoeuvrability of the fibre is in particular greatly improved thanks to its exceptional insensitivity to bending losses.

The fibre of Figure 3 is also compatible with a high-speed transmission. The system thus makes it possible to obtain error-free transmissions for a data rate greater than or equal to 10 Gb/s (10 GbE) for a significant distance, up to, for example, 100 m or 300 m.

The optical fibers according to the present invention may be manufactured by drawing from final preforms.

A final preform may be manufactured by providing a primary preform with an outer overcladding layer (i.e., an overcladding process). The outer overcladding layer consists of doped or undoped, natural or synthetic, silica glass. Several methods are available for providing the outer overcladding layer.

In a first example of a method, the outer overcladding layer may be provided by depositing and vitrifying natural or synthetic silica particles on the outer periphery of the primary preform under the influence of heat. Such a process is known, for example, from U.S. Patent Nos. 5,522,007; 5,194,714; 6,269,663; and 6,202,447.

In another example of a method, a primary preform may be overcladded using a silica sleeve tube, which may or may not be doped. This sleeve tube may then be collapsed onto the primary preform.

In yet another example of a method, an overcladding layer may be applied via an Outside Vapor Deposition (OVD) method. Here, a soot layer is first deposited on the outer periphery of a primary preform, and then the soot layer is vitrified to form glass.

The primary preforms may be manufactured via outside vapor deposition techniques, such as Outside Vapor Deposition (OVD) and Vapor Axial Deposition (VAD). Alternatively, the primary preforms may be manufactured via inside deposition techniques in which glass layers are deposited on the inner surface of a substrate tube of doped or undoped silica glass, such as Modified Chemical Vapor Deposition (MCVD), Furnace Chemical Vapor Deposition (FCVD), and Plasma Chemical Vapor Deposition (PCVD).

In an example of an embodiment, the primary preforms are manufactured using a PCVD process, which allows the shape of the central core's gradient refractive index profile to be controlled very precisely.

The depressed trench may be deposited on the inner surface of a substrate tube as part of the chemical vapor deposition process. More typically, the depressed trench may be manufactured either (i) by using a fluorine-doped substrate tube as the starting point of the internal deposition process for deposition of the gradient refractive index central core or (ii) by sleeving a fluorine-doped silica tube over the gradient refractive index central core, which itself may be produced using an outside deposition process (e.g., OVD or VAD).

In yet another example of an embodiment, a primary preform is manufactured via an inside deposition process using a fluorine-doped substrate tube. The resulting tube containing the deposited layers may be sleeved by one or more additional fluorine-doped silica tubes so as to increase the thickness of the depressed trench, or to create a depressed trench having a varying refractive index over its width. Although not required, one or more additional sleeve tubes (e.g., fluorine-doped substrate tubes) may be collapsed onto the primary preform before an overcladding step is carried out. The process of sleeving and collapsing is sometimes referred to as jacketing and may be repeated to build several glass layers on the outside of the primary preform.

Of course, the present invention is not limited to the embodiments described by way of example. The fibre according to the invention can be installed in numerous transmission systems having good compatibility with the other fibres of the system. The multimode fibre according to the invention can be used in an Ethernet optical system with an improved bandwidth. The fibre can also be used in a local area network (LAN).

The present invention is recited in the claims that follow.

## Claims

1. A silica-based multimode optical fibre comprising, from the centre to the periphery an optical core and an outer optical cladding being in direct contact with the optical core, said outer optical cladding having a refractive index defined by $n_{cladding}$,

   - wherein the optical core has a radius ($r_1$) which is comprised between 22 $\mu$m and 28 $\mu$m and an $\alpha$ refractive index profile with a graded index with respect to the outer optical cladding, wherein the maximum refractive index of the optical core is defined by $n_{max}$ and the minimum refractive index of the optical core is defined by $n_{min}$;
   - wherein the $\alpha$ index profile follows a power law for parameter $\alpha$ defined by:

   $$n(r) = n_{max}\sqrt{1 - 2\Delta\left(\frac{r}{r_1}\right)^{\alpha}}$$

   with $\alpha \geq 1$;

   $$\Delta = \frac{\left(n_{max}^2 - n_{min}^2\right)}{2n_{max}^2}$$

   - wherein nmax-nmin > 10x10$^{-3}$; and
   - wherein the fibre exhibits a bending loss of less than 0.1 dB for two turns for a radius of curvature of 15 mm;

   **characterised in that** 2x10$^{-3}$ < $n_{min}$ - $n_{cladding}$ $\leq$ 5x10$^{-3}$.

2. The fibre according to claim 1, in which the parameter $\alpha$ of the refractive index profile of the core is comprised between 1.9 and 2.2, preferably between 1.9 and 2.1 and more advantageously between 2.0 and 2.1.

3. The fibre according to any one of claims 1-2, in which the numerical aperture NA of the fibre defined by $NA = \sqrt{n_{max}^2 - n_{min}^2}$ is greater than 0.18.

4. The fibre according to any one of claims 1-3, in which the numerical aperture NA of the fibre defined by $NA = \sqrt{n_{max}^2 - n_{min}^2}$ is less than 0.29.

5. Optical transmission system comprising at least one portion of the multimode optical fibre according to any one of claims 1 to 4.

6. System according to claim 5 having a data rate greater than or equal to 10 Gb/s up to 100 m.

7. System according to claim 5 having a data rate greater than or equal to 10 Gb/s up to 300 m.

8. Use of the multimode optical fibre according to any one of claims 1-4 in a local area network (LAN).

9. Use of the optical transmission system according to any one of claims 5-7 in a local area network (LAN).

## Patentansprüche

1. Eine auf Siliciumdioxid basierende optische Multimodenfaser, umfassend von der Mitte bis zum Umfang einen optischen Kern und einen äußeren optischen Mantel, der sich in direkter Berührung mit dem optischen Kern befindet, wobei dieser äußere optische Mantel einen durch $n_{Mantel}$ definierten Brechungsindex besitzt und:

   - wobei der optische Kern einen zwischen 22 $\mu$m und 28 $\mu$m betragenden Radius ($r_1$) und ein $\alpha$-Brechungsindexprofil mit einem auf den äußeren optischen Mantel bezogenen Gradientenindex besitzt, wobei der größte Brechungsindex des optischen Kerns durch $n_{max}$ und der kleinste Brechungsindex des optischen Kerns durch $n_{min}$ definiert sein,
   - wobei das $\alpha$-Brechungsindexprofil einem Potenzgesetz für Parameter $\alpha$ folgt, das definiert ist durch:

   $$n(r) = n_{max}\sqrt{1 - 2\Delta\left(\frac{r}{r_1}\right)^{\alpha}},$$

   mit $\alpha \geq 1$;

   $$-\Delta = \frac{\left(n_{max}^2 - n_{min}^2\right)}{2n_{max}^2},$$

- $n_{max}$ - $n_{min}$ > 10·10⁻³; und
- wobei die Faser einen Krümmungsverlust von kleiner als 0,1 dB für zwei Krümmungen mit einem Krümmungsradius von 15 mm aufweist,

**dadurch gekennzeichnet, dass** 2·10⁻³ < $n_{min}$ - $n_{Mantel}$ ≤ 5·10⁻³.

2. Die Faser nach Anspruch 1, wobei der Parameter $\alpha$ des Brechungsindexprofils des Kerns zwischen 1,9 und 2,2, vorzugsweise zwischen 1,9 und 2,1, und noch bevorzugter zwischen 2,0 und 2,1 beträgt.

3. Die Faser nach Anspruch 1 oder 2, wobei die durch $NA = \sqrt{n_{max}^2 - n_{min}^2}$ definierte numerische Apertur NA der Faser mehr als 0,18 beträgt.

4. Die Faser nach einem der Ansprüche 1 bis 3, wobei die durch $NA = \sqrt{n_{max}^2 - n_{min}^2}$ definierte numerische Apertur NA der Faser weniger als 0,29 beträgt.

5. Optisches Übertragungssystem umfassend mindestens einen Teil der optischen Multimodenfaser nach einem der Ansprüche 1 bis 4.

6. System nach Anspruch 5 mit einer Datenrate von über oder gleich 10 Gb/s bis zu 100 m.

7. System nach Anspruch 5 mit einer Datenrate von über oder gleich 10 Gb/s bis zu 300 m.

8. Verwendung der optischen Multimodenfaser nach einem der Ansprüche 1 bis 4 in einem lokalen Netzwerk (LAN).

9. Verwendung des optischen Übertragungssystems nach einem der Ansprüche 5 bis 7 in einem lokalen Netzwerk (LAN).

**Revendications**

1. Fibre optique multimode à base de silice comprenant, du centre à la périphérie, un coeur optique et une gaine optique externe qui est en contact direct avec le coeur optique, ladite gaine optique externe ayant un indice de réfraction défini par $n_{gaine}$,

- dans laquelle le coeur optique a un rayon ($r_1$) qui est compris entre 22 $\mu$m et 28 $\mu$m et un profil d'indice de réfraction $\alpha$ avec un indice gradué par rapport à la gaine optique externe, où l'indice de réfraction maximal du coeur optique est défini par $n_{max}$ et l'indice de réfraction minimal du coeur optique est défini par nmin ;

- dans laquelle le profil d'indice $\alpha$ suit une loi de puissance pour le paramètre $\alpha$ définie par :

$$n(r) = n_{max} \sqrt{1 - 2\Delta \left(\frac{r}{r_1}\right)^{\alpha}}$$

Avec $\alpha \geq 1$ ;

$$\Delta = \frac{\left(n_{max}^2 - n_{min}^2\right)}{2 n_{max}^2}$$

- dans laquelle $n_{max}$ - $n_{min}$ > 10x10⁻³ ; et
- dans laquelle la fibre présente une perte en flexion inférieure à 0,1 dB pour deux tours pour un rayon de courbure de 15 mm ;
- **caractérisée en ce que** 2x10⁻³ < $n_{min}$ - $n_{gaine}$ ≤ 5x10⁻³.

2. Fibre selon la revendication 1, dans laquelle le paramètre $\alpha$ du profil d'indice de réfraction du coeur est compris entre 1,9 et 2,2, de préférence entre 1,9 et 2,1 et plus avantageusement entre 2,0 et 2,1.

3. Fibre selon l'une quelconque des revendications 1 et 2, dans laquelle l'ouverture numérique NA de la fibre définie par

$$NA = \sqrt{n_{max}^2 - n_{min}^2}$$

est supérieure à 0,18.

4. Fibre selon l'une quelconque des revendications 1 à 3, dans laquelle l'ouverture numérique NA de la fibre définie par

$$NA = \sqrt{n_{max}^2 - n_{min}^2}$$

est inférieure à 0,29.

5. Système de transmission optique comprenant au moins une partie de la fibre optique multimode selon l'une quelconque des revendications 1 à 4.

6. Système selon la revendication 5 ayant un débit de données supérieur ou égal à 10 Gb/s jusqu'à 100 m.

7. Système selon la revendication 5 ayant un débit de données supérieur ou égal à 10 Gb/s jusqu'à 300 m.

8. Utilisation de la fibre optique multimode selon l'une

**EP 2 299 303 B1**

quelconque des revendications 1 à 4 dans un réseau local (LAN).

9. Utilisation du système de transmission optique selon l'une quelconque des revendications 5 à 7 dans un réseau local (LAN).

Figure 1

Figure 2

Figure 3

Bending radius [mm]

Figure 4

Figure 5

Figure 6

Figure 7

Figure 8

Figure 9

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1164393 A1
- JP 2002318315 A
- EP 2056138 A1
- US 4176911 A
- EP 1727302 A
- WO 2008085851 A
- US 20080166094 A
- US 5522007 A
- US 5194714 A
- US 6269663 B
- US 6202447 B

**Non-patent literature cited in the description**

- **D. GLOGE et al.** *Bell system Technical Journal,* 1973, 1563-1578
- **G. YABRE.** *Journal of Lightwave Technology,* February 2000, vol. 18 (2), 166-177
- **JACOMME L.** *applied optics USA,* 01 November 1975, vol. 14 (11), 2578-2584